# EUROPEAN PATENT APPLICATION

(11) **EP 4 664 539 A1**
(43) Date of publication of application: **17.12.2025**
(21) Application number: 24872933.7
(22) Date of filing: 25.09.2024
(51) Int. Cl.: H01M 4/13, H01M 4/62, H01M 10/052, H01M 4/02

(54) **ANODE, ANODE DAM COATING COMPOSITION, AND LITHIUM SECONDARY BATTERY**

(30) Priority: 26.09.2023 KR 20230129252
(71) Applicant: LG Energy Solution, Ltd., Seoul 07335 (KR)
(72) Inventor: CHOI, Ye Rim, Daejeon 34122 (KR); KIM, Dong Hyun, Daejeon 34122 (KR); CHO, Hyung Suk, Daejeon 34122 (KR); MOON, Il Jae, Daejeon 34122 (KR)
(74) Representative: Plasseraud IP
(86) International application number: PCT/KR2024/014540
(87) International publication number: WO 2025/071225

(57) **Abstract**

A composition for coating a negative electrode dam according to one embodiment of the present disclosure is in surface contact with an end of the negative electrode active material layer and includes a hydrophobic powder, a cellulose-based compound, a rubber-based binder, and inorganic particles.

The composition for coating a negative electrode dam has excellent surface tension and adhesion, thereby inhibiting the occurrence of a fat-edge of the negative electrode, and the dam coating layer formed from the composition for coating a negative electrode dam has the effect of reducing the sliding length of the negative electrode active material layer.

## Description

### [Cross-Reference to Related Applications]

This application claims the benefit of priority from Korean Patent Application No. 10-2023-0129252, filed on Sep. 26, 2023, the disclosures of which are incorporated herein by reference.

### [Technical Field]

The present disclosure relates to a negative electrode having a short length of negative electrode sliding area, wherein fat-edge generation at the negative electrode end is prevented or suppressed, a composition for coating a negative electrode dam for the same, and a lithium secondary battery including the negative electrode.

### [Background]

The demand for batteries as an energy source is increasing rapidly due to technological development and increasing demand in industries such as mobile devices, automobiles, and energy storage. Among these secondary batteries, lithium secondary batteries with high energy density and discharge voltage have been widely researched, commercialized, and used.

Depending on the shape of the battery case, secondary batteries are classified into cylindrical and prismatic batteries, where the electrode assembly is embedded in a cylindrical or prismatic metal can, and pouch-type batteries, where the electrode assembly is embedded in a pouch-type case made of aluminum laminated sheet.

Moreover, as a chargeable power generator including a laminated structure of positive electrode/separator/negative electrode, the electrode assembly embedded in the battery case may be a jelly-roll type electrode assembly wound by interposing a separator between a long sheet-shaped positive electrode and negative electrode to which an electrode compound including an electrode active material is applied, a stack-type electrode assembly including a plurality of positive electrodes and negative electrodes punched and notched in predetermined size units and sequentially stacked with a separator interposed, a stacked/foldable electrode assembly comprising a stack of bi-cells or full cells wound with predetermined size units of positive electrodes and negative electrodes and a separator.

The positive electrode and negative electrode comprising the electrode assembly are manufactured by applying the electrode slurry prepared in the mixing process to the electrode current collector in a predetermined pattern and a certain thickness through a slot die, and then drying it. However, since the electrode slurry is a fluid, after the application process of the electrode slurry, the electrode slurry flows down due to the fluidity of the electrode slurry, a phenomenon called sliding occurs.

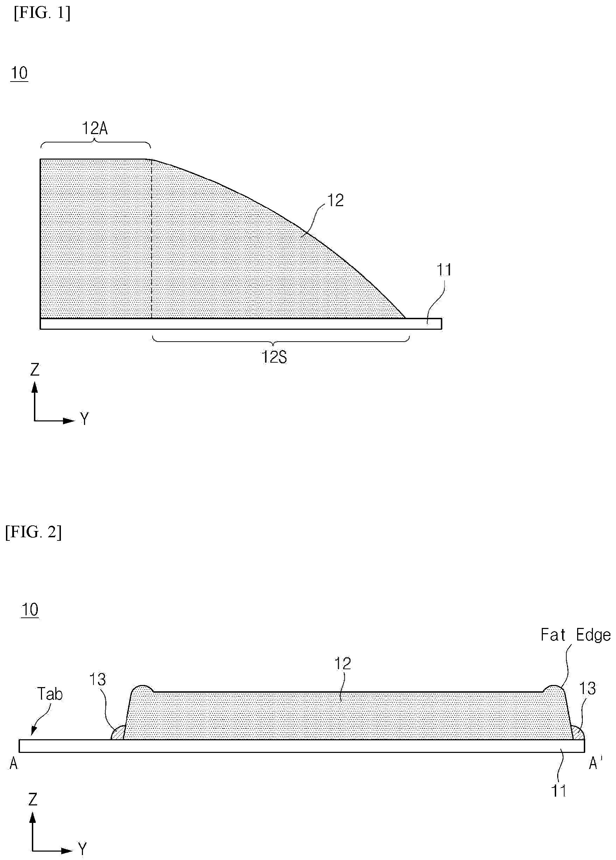

FIG. 1 is an enlarged view of one side of a cross-section of a negative electrode having an electrode slurry applied to a current collector. Referring to FIG. 1, the negative electrode active material layer 12 on which the electrode slurry has been applied is divided into a flattening region 12A, which is parallel to the plane of the negative electrode current collector 11 due to its constant thickness, and a sliding region 12S, which is inclined to the plane of the current collector 11 due to a gradual decrease in the thickness of the electrode active material layer 12 along the direction toward the non-coated part of the current collector 11 where the electrode slurry has not been applied.

Meanwhile, the positive electrode and the negative electrode comprising the electrode assembly are facing each other with a separator interposed between them, and the length of the sliding region of the positive electrode and the length of the sliding region of the negative electrode may be different, and the inclined shape of the sliding region may be variously shaped, such as an upwardly convex shape, a downwardly convex shape, a straight shape, an S-shaped shape, and the slope may be different even if the inclined shape is the same. As a result, the negative electrode sliding region may have a localized imbalance in the NP ratio, depending on the facing position of the sliding region, which may cause lithium to precipitate from the negative electrode and cause safety accidents such as short circuits.

Since an imbalance in the NP ratio tends to be less likely to occur the larger the ratio of the loading amount of the negative electrode to the loading amount of the positive electrode in the theoretical positive/negative electrode-facing area, technical attempts have recently been made to increase the loading amount in the sliding region of the negative electrode. As one of these attempts, a technique is being investigated in which a dam coating composition is superimposed on the edge where the negative electrode slurry is applied, and the dam coating composition inhibits the negative electrode slurry from flowing down, thereby minimizing the sliding length of the negative electrode active material layer.

However, in the conventional dam coating composition, a fat-edge phenomenon occurs where the thickness of the negative electrode active material layer and the dam coating layer overlap and becomes thicker than the thickness of the negative electrode active material layer. FIG. 2 is a cross-sectional view of a negative electrode with a fat-edge, and referring to FIG. 2, a fat-edge is formed at both ends of the negative electrode active material layer 12 in the Y-axis direction and an upwardly protruding fat-edge along the Z-axis direction. The presence of these fat-edges on the negative electrode may cause damage to the current collector layer during the rolling process, which may pose a safety concern. The fat-edge can also damage other electrodes or separators during multiple stacking of positive electrodes, negative electrodes, and separators.

Therefore, it is necessary to develop a technology for a negative electrode with a short sliding length and no fat-edge, and a method for manufacturing the same.

### [Summary]

### [Technical Problem]

It is an object to provide a negative electrode having a short length of a negative electrode sliding region, wherein the occurrence of a fat-edge at the negative electrode end is prevented or suppressed, a composition for coating a negative electrode dam for the same, and a lithium secondary battery including the negative electrode.

### [Technical Solution]

According to one embodiment of the present disclosure, a negative electrode for a lithium secondary battery is provided. The negative electrode for a lithium secondary battery includes: a negative electrode current collector; a negative electrode active material layer disposed on one or both sides of the negative electrode current collector; and a dam coating layer disposed on one or both sides of the negative electrode current collector, wherein the dam coating layer is in surface contact with an end of the negative electrode active material layer and includes a hydrophobic powder, a cellulose-based compound, a rubber-based binder, and inorganic particles.

In an exemplary embodiment, the dam coating layer, based on 100 parts by weight of dam coating layer, may include: 15 to 50 parts by weight of the hydrophobic powder; 0.5 to 10 parts by weight of the cellulose-based compound; 3 to 15 parts by weight of the rubber-based binder; and 35 to 75 parts by weight of the inorganic particles.

In an exemplary embodiment, the hydrophobic powder may be one or a mixture of two species selected from the group consisting of boron nitride (BN), silicon nitride (Si₃N₄), aluminum nitride (AlN), silica, silicate, and organopolysiloxane.

In an exemplary embodiment, the weight ratio of the inorganic particles to the hydrophobic powder may be 5:1 to 1:2.

In an exemplary embodiment, the cellulose-based compound may be at least one or two or more species selected from the group consisting of carboxyl methyl cellulose (CMC), cellulose acetate, cellulose acetate butylate, cellulose acetate propionate, a lithium salt of carboxyl methyl cellulose (CMC-Li), a sodium salt of carboxyl methyl cellulose (CMC-Na).

In an exemplary embodiment, the rubber-based binder may be a styrene-butadiene rubber (SBR).

In an exemplary embodiment, the inorganic particles may be at least one or two or more species selected from the group consisting of AlO(OH), Al₂O₃, γ-AlOOH, Al(OH)₃, SiO₂, TiO₂, SnO₂, CeO₂, MgO, NiO, CaO, ZnO, ZrO₂, Y₂O₃, SrTiO₃, BaTiO₃, and Mg(OH)₂.

In an exemplary embodiment, the cellulose-based compound may have a weight average molecular weight in the range of 800,000 to 2,000,000.

In an exemplary embodiment, the negative electrode active material layer is divided into a flattening region, the surface of which is parallel to the plane of the negative electrode current collector, and a sliding region extending from the flattening region, the surface of which is inclined to the plane of the negative electrode current collector, wherein
the sliding region may be located at one end and the other end of the negative electrode active material layer with respect to the full-length direction.

In an exemplary embodiment, a full-length direction length of the sliding region may be 4 mm or less.

In an exemplary embodiment, a full-length direction length of the sliding region may be in the range of 0.5 to 3.5 mm.
In an exemplary embodiment, the thickness ratio (T2/T1) of the maximum thickness value T2 of the dam coating layer to the average value T1 of the thickness of the negative electrode active material layer in the flattening region in the negative electrode active material layer may be within the range of 0.1 to 0.4.

In an exemplary embodiment, the dam coating layer may have a maximum value of its thickness within the range of 20 to 40 *µ*m, and its full-length direction length may be 3 mm or less.

In an exemplary embodiment, an adhesion of the dam coating layer may be 90gf/20 mm or more.

According to another exemplary embodiment of the present disclosure, a composition for coating a negative electrode dam is provided, which may include a solvent, a hydrophobic powder, a cellulose-based compound, a rubber-based binder, and inorganic particles.

In the composition for coating a negative electrode dam according to an exemplary embodiment, solids excluding the solvents, based on 100 parts by weight of solids, may include: 15 to 50 parts by weight of the hydrophobic powder; 0.5 to 10 parts by weight of the cellulose-based compound; 3 to 15 parts by weight of the rubber-based binder; and 35 to 75 parts by weight of the inorganic particles.

In an exemplary embodiment, the weight ratio of the inorganic particles to the hydrophobic powder may be 5:1 to 1:2.

In the composition for coating a negative electrode dam according to an exemplary embodiment, the content of solids, excluding the solvent, may be from 18 to 38 parts by weight, based on 100 parts by weight of the composition for coating a negative electrode dam.

The composition for coating a negative electrode dam according to an exemplary embodiment may have a surface tension of 72 mN/mm or more.

According to yet another exemplary embodiment of the present disclosure, a lithium secondary battery including: the negative electrode; a positive electrode; a separator; and an electrolyte is provided.

### [Advantageous Effects]

According to one embodiment of the present disclosure, the surface tension of the composition for coating a negative electrode dam is raised to the level of the negative electrode slurry, such that the composition for coating a negative electrode dam has a propensity to remain at the interface without being incorporated into the negative electrode slurry, thereby preventing the occurrence of a fat-edge.

Thus, the sliding length of the negative electrode active material layer is shortened by the dam coating layer, which can reduce the risk of NP-ratio inversion in lithium secondary batteries.

### [Brief Description of the Drawings]

FIG. 1 is an enlarged view of one side of a cross-section of a negative electrode with a negative electrode slurry applied to the current collector according to the prior art.
FIG. 2 is a cross-sectional view of the negative electrode where the fat-edge occurred.
FIG. 3 is an enlarged view of one side of a cross-section of a negative electrode to which a slurry for the negative electrode and a composition for dam coating have been applied, according to exemplary embodiments.
FIG. 4 is a top view of a negative electrode sheet to illustrate a negative electrode according to exemplary embodiments.
FIG. 5 is a cross-sectional view cut along A-A' in FIG. 4.

### [Description of Reference Numerals]

10, 100: NEGATIVE ELECTRODE
11, 110: NEGATIVE ELECTRODE CURRENT COLLECTOR
12, 120: NEGATIVE ELECTRODE ACTIVE MATERIAL LAYER
13, 130: DAM COATING LAYER
NES: NEGATIVE ELECTRODE SHEET

### [Best Mode for Carrying out the Invention]

Hereinafter, the present disclosure will be described in more detail to provide a better understanding of the present disclosure.

The terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

The terms used in this application is used to describe certain embodiments only and is not intended to limit the concept of the present invention. Singular expressions include the plural unless the context clearly indicates otherwise.

In this application, expressions such as "includes", "provided with", or "has" are intended to designate the presence of the features, counts, steps, operations, components, parts, or combinations thereof described, and are not to be understood as precluding the possibility of the presence or addition of one or more other features, counts, operations, components, parts, or combinations thereof.

As used herein, the term "combination(s) thereof" included on the surface of a Makushi-format representation means one or more mixtures or combinations selected from the group consisting of the components described in the Makushi-format representation, and includes one or more selected from the group consisting of the components.

In this specification, references to "A and/or B" shall mean "A or B or both".

In this specification, "%" means wt% unless otherwise indicated.

For the purposes of this specification, specific surface area may be measured by the Brunauer-Emmett-Teller (BET) method. For example, it can be measured by the BET 6-point method by the nitrogen gas adsorption distribution method using a porosimetry analyzer (Porosimetry analyzer; Bell Japan Inc, Belsorp-II mini).

As used herein, the average particle diameter (D50) may be defined as the particle diameter at 50% of the particle diameter distribution. The average particle diameter is not particularly limited, but can be measured, for example, by laser diffraction method or scanning electron microscopy (SEM) photography. The laser diffraction method is generally capable of measuring particle diameters from the submicron region to a few millimeters and can yield highly reproducible and highly resolvable results.

In this specification, "Mw" refers to the weight average molecular weight of a standard polystyrene measured by Gel Permeation Chromatography (GPC). Specifically, the Mw is a conversion of the value measured by GPC under the following conditions, and standard polystyrene from the Agilent system was used for calibration.

### <Measurement conditions>

Measuring instrument: Agilent GPC (Agulent 1200 series, USA)
Column: Two PL Mixed B connected
Column temperature: 40 °C
Eluent: Tetrahydrofuran
Flow rate: 1.0 mL/min
Concentration: ~1 mg/mL (100 µL injection)

In this specification, the longitudinal direction (MD) of the negative electrode sheet and the full-width direction of the negative electrode are defined in the X-axis direction, the transverse direction (TD) of the negative electrode sheet and the full-length direction of the negative electrode are defined in the Y-axis direction, and the direction perpendicular to the plane by the combination of the X-axis direction and the Y-axis direction is defined in the Z-axis direction, and the X-axis direction and the Y-axis direction are referred to as the horizontal direction.

### Composition for coating negative electrode dam

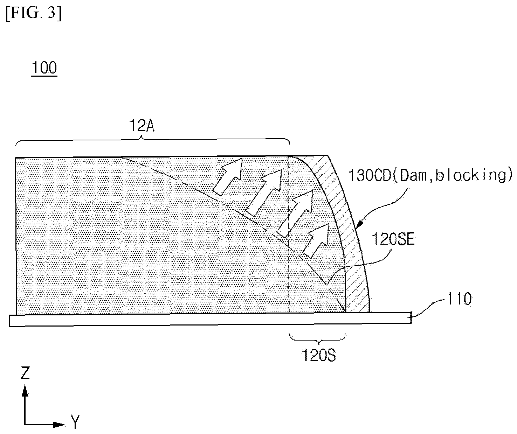

FIG. 1 is an enlarged view of one side of a cross-section of a negative electrode with a negative electrode slurry applied to the current collector according to the prior art. FIG. 2 is a cross-sectional view of a negative electrode with a fat-edge. FIG. 3 is an enlarged view of one side of a cross-section of a negative electrode to which a negative electrode slurry and a composition for coating a negative electrode dam have been applied, according to exemplary embodiments.

Referring to FIG. 1, when the composition for coating the negative electrode dam is not applied, the edge of the area where the negative electrode slurry is applied spreads out along the current collector 11 due to the fluidity of the negative electrode slurry, and the end of the negative electrode active material layer 12 dried in this manner has an inclined shape with respect to the plane of the negative electrode current collector 11. The end of the negative electrode active material layer 12 having an inclined shape in the negative electrode active material layer 12 is referred to as the sliding region 12S, and the sliding length, which is the length in the Y-axis direction of the sliding region, reaches about 4 to 10 mm.

Meanwhile, referring to FIG. 3, when the composition for coating a negative electrode dam 130CD is applied to the edge of the area where the negative electrode slurry 120SE is applied, the sliding length of the sliding region 120S of the negative electrode active material layer becomes much shorter compared to FIG. 1 because the composition for coating a negative electrode dam 130CD acts as a dam and inhibits the negative electrode slurry 120SE from flowing down.

However, the composition for coating a negative electrode dam 130CD is applied in partial overlap with the negative electrode slurry 120S, and a portion of the composition for coating a negative electrode dam 130CD located on the negative electrode slurry may diffuse into the negative electrode slurry 120S to form a fat-edge as shown in FIG. 2. The inventors of the present disclosure have discovered, after much research, that if the surface tension of the dam coating composition is controlled to the level of the negative electrode slurry, the dam coating composition will tend to remain at the interface with the negative electrode slurry, thereby inhibiting the diffusion of the dam coating composition into the negative electrode slurry.

In order to control the surface tension of the dam coating composition to the level of the negative electrode slurry, the composition for coating a negative electrode dam according to one embodiment may include a solvent, a hydrophobic powder, a cellulose-based compound, a rubber-based binder and inorganic particles. The hydrophobic powder has the effect of raising the surface tension of the composition for coating a negative electrode dam to the level of the surface tension of the negative electrode active material layer, and the rubber-based binder imparts flexibility to the dam coating layer to prevent deintercalation of the dam coating layer when physical external forces are applied, ultimately improving the stability of the dam coating layer.

The solvent may be any solvent commonly used in the art, such as dimethylsulfoxide (DMSO), isopropyl alcohol, N-methylpyrrolidone (NMP), acetone, or water, and one or more of these may be used alone or in a mixture of two or more. Of these, water is preferred as a solvent for the composition for coating a negative electrode dam due to its high surface tension.

The solvent may be included at a content that allows the composition for coating the negative electrode dam to have a suitable viscosity, considering the coatability of the composition for coating the negative electrode dam.

The hydrophobic powder may be one or a mixture of two species selected from the group consisting of boron nitride (BN), silicon nitride (Si₃N₄), aluminum nitride (AlN), silica, silicates and organopolysiloxanes, preferably boron nitride (BN), silicon nitride (Si₃N₄), aluminum nitride (AlN), and more preferably boron nitride (BN).

The cellulose-based compound is a water-soluble polymeric compound having a predetermined viscosity, which can increase the cohesion of the solvent and can serve to impart adhesion to the composition for coating the negative electrode dam.

The cellulose-based compound may be, in particular, one or two or more compounds selected from the group consisting of carboxyl methyl cellulose (CMC), cellulose acetate, cellulose acetate butylate, cellulose acetate propionate, lithium salt of carboxyl methyl cellulose (CMC-Li), and sodium salt of carboxyl methyl cellulose (CMC-Na).

The cellulose-based compound may have a weight average molecular weight (Mw) in the range of 800,000 to 2,000,000, preferably 900,000 to 1,800,000, more preferably 1,000,000 to 1,500,000. When the weight average molecular weight of the cellulose-based compound is in the above range, it imparts a suitable viscosity to the composition for coating the dam, which is desirable in terms of coating performance.

The rubber-based binder may be one or a mixture of two or more species selected from the group consisting of styrene-butadiene rubber, acrylate styrene-butadiene rubber, acrylonitrile-butadiene rubber, acrylonitrile-butadiene-styrene rubber, acrylic rubber, butyl rubber and fluororubber, and preferably, may be styrene-butadiene rubber (SBR). Styrene-butadiene rubber has excellent wet adhesion and good flexibility, and is therefore preferred as the rubber-based binder of the present disclosure.

The styrene-butadiene rubber may contain styrene monomer-derived repeating units and butadiene monomer-derived repeating units in a weight ratio of 70:30 to 30:70. Further, the total weight of the styrene monomer-derived repeating units and butadiene monomer-derived repeating units may be from 30 to 100 wt% or from 30 to 70 wt%, based on the total weight of the styrene-butadiene rubber.

Examples of the styrene monomers include styrene, α-methylstyrene, p-methylstyrene, 3-methylstyrene, 4-methylstyrene, 4-propylstyrene, l-vinylnaphthalene, 4-cyclohexylstyrene, 4-(p-methylphenyl)styrene, 1-vinyl-5-hexylnaphthalene, derivatives thereof, and mixtures thereof, and examples of the butadiene monomers include 1,3-butadiene, isoprene, 2,3-dimethyl-1,3-butadiene, 2-ethyl-1,3-butadiene, derivatives thereof, and mixtures thereof.

If necessary, the styrene-butadiene rubber may further contain monomer repeating units having crosslinking groups. Based on the total weight of the styrene-butadiene rubber, the monomer-derived repeating units having cross-linking groups may be contained at a content of 12 parts by weight or less to reduce electrolyte absorption.

The inorganic particles have the effect of increasing electrical insulation and thermal safety and improving the strength of the dam coating layer. The content of the inorganic particles can be appropriately adjusted considering the viscosity, insulation, dispersion, coating properties, etc. of the composition for coating the negative electrode dam.

The inorganic particles may be one or two or more compounds selected from the group consisting of AlO(OH), Al₂O₃, γ-AlOOH, Al(OH)₃, SiO₂, TiO₂, SnO₂, CeO₂, MgO, NiO, CaO, ZnO, ZrO₂, Y₂O₃, SrTiO₃, BaTiO₃, and Mg(OH)₂, and may be one or more compounds selected from the group consisting of AlO(OH), Al₂O₃, γ-AlOOH and Al(OH)₃. For example, the inorganic particles may be AlO(OH).

The average particle diameter (D₅₀) of the inorganic particles may be from 0.1 µm to 100 µm; from 0.5 µm to 80 µm; from 1 µm to 50 µm; from 2 µm to 30 µm; from 3 µm to 20 µm; or from 5 µm to 10 µm. When the size of the inorganic particles is in the above range, the composition for coating the negative electrode dam may be uniformly coated on the negative electrode current collector and the negative electrode slurry.

In the composition for coating the negative electrode dam according to one embodiment, the content of solids excluding the solvent may range from 18 to 38 parts by weight, more particularly from 20 to 36 parts by weight, and more particularly from 22 to 33 parts by weight, based on 100 parts by weight of the composition for coating the negative electrode dam. When the content of the solids in the composition for coating the negative electrode dam satisfies the above numerical range, it is preferable in terms of the coating performance of the composition for coating the negative electrode dam and the effect of reducing the sliding length of the negative electrode slurry.

In a composition for coating a negative electrode dam according to one embodiment, the solids, excluding the solvent, may include, based on 100 parts by weight of the solids, 15 to 50 parts by weight of the hydrophobic powder; 0.5 to 10 parts by weight of the cellulose-based compound; 3 to 15 parts by weight of the rubber-based binder; and 35 to 75 parts by weight of the inorganic particles.

In one embodiment, the solids may include from 15 to 50 parts by weight, more particularly from 17 to 48 parts by weight, more particularly from 18 to 45 parts by weight, of the hydrophobic powder. Furthermore, the solids may include from 0.5 to 10 parts by weight, more particularly from 1 to 8 parts by weight, more particularly from 2 to 6 parts by weight, of the cellulose-based compound. Furthermore, the solids may include from 3 to 15 parts by weight, more particularly from 4 to 13 parts by weight, more particularly from 5 to 10 parts by weight, of the rubber-based binder. Furthermore, the solids may include from 35 to 75 parts by weight, more particularly from 38 to 73 parts by weight, more particularly from 41 to 70 parts by weight, of the inorganic particles. When the hydrophobic powder, cellulose-based compound, rubber-based binder, and inorganic particles are included in the above content range, the composition for coating the negative electrode dam can have a surface tension and good adhesion performance similar to that of the negative electrode slurry, and can have a suitable viscosity. Herein, the numerical range of each parts by weight of the hydrophobic powder or the like is based on 100 parts by weight of solids.

In one embodiment, the weight ratio of the inorganic particles to the hydrophobic powder may be in the range of 5:1 to 1:2, preferably in the range of 4:1 to 2:3, and more preferably in the range of 3:1 to 1:1. When the weight ratio of the inorganic particles to the hydrophobic powder is in the above range, the composition for coating the negative electrode dam may have a surface tension similar to that of the negative electrode slurry and good adhesion performance.

The negative electrode dam coating layer 130 may be formed by applying the negative electrode slurry to the negative electrode current collector, applying the composition for coating the negative electrode dam around the boundary between the negative electrode slurry and the non-coated part, and drying the same, or by simultaneously coating the negative electrode slurry and the composition for coating the negative electrode dam and drying the same.

In one embodiment, the composition for coating the negative electrode dam may have a viscosity of the composition measured at a shear rate of 2.5/s at 25°C, which may be from 2,000 cps to 15,000 cps, more particularly from 5,000 cps to 12,000 cps, and more particularly from 7,000 cps to 10,000 cps. For the composition for coating the negative electrode dam having a viscosity value within the above range, the dam coating layer may have a thickness and width length in a suitable range to improve sliding of the negative electrode active material layer.

Methods for coating the composition for coating the negative electrode dam may include, but are not limited to, spray coating, spin coating, roll coating, die coating, gravure printing, bar coating, and the like, with die coating and gravure printing methods preferably being utilized.

The composition for coating the negative electrode dam according to one embodiment may have a surface tension of at least 72 mN/mm, more particularly at least 73 mN/mm, more particularly in the range of 74 mN/mm to 80 mN/mm. A composition for coating a negative electrode dam having a surface tension in the above numerical range has the effect of preventing the occurrence of a fat-edge at the negative electrode. The surface tension in the above numerical range is comparable to the surface tension of the negative electrode slurry.

The surface tension was measured using a DCA-200 (Dynamic Contact Angle System, SEO) instrument with the following conditions:
Motor speed: 15 rpm/s
Probe type: Ring
Immersion depth: 4
Surface Detect weight: 0.005
Stabilization time: 5

### Negative electrode for lithium secondary battery

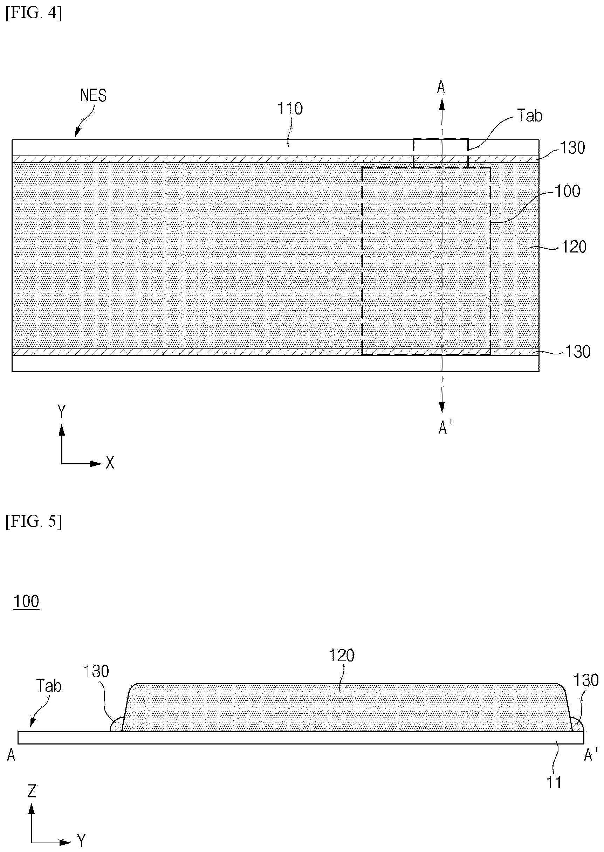

FIG. 4 is a top view of a negative electrode sheet to illustrate a negative electrode according to exemplary embodiments, and FIG. 5 is a cross-sectional view cut along A-A' in FIG. 4.

Referring to these figures, the negative electrode 100 according to exemplary embodiments includes a negative electrode current collector 110; a negative electrode active material layer 120 disposed on one or both sides of the negative electrode current collector 110; and a dam coating layer 130 disposed on one or both sides of the negative electrode current collector 110, wherein the dam coating layer 130 may be structured to be in surface contact with an end of the negative electrode active material layer 120. The end is an end relative to a transverse direction (Y-axis direction) of the negative electrode sheet (NES) or a full-length direction (Y-axis direction) of the negative electrode 100.

Referring to FIGS. 3 and 4, a negative electrode active material layer 120 is formed in the center relative to the transverse direction (Y-axis direction) of the negative electrode sheet (NES), which is the base material of the negative electrode 100, and a dam coating layer 130 is formed on both edges based on the transverse direction (Y-axis direction) of the negative electrode sheet (NES), respectively, and a non-coated part not covered by the negative electrode active material layer 120 or the dam coating layer 130 exists on the outside of the dam coating layer 130. And by notching and cutting along the notching lines (dotted lines) indicated on such a negative electrode sheet NES, the negative electrode 100 may be manufactured. While FIG. 4 illustrates a negative electrode in which the dam coating layer 130 is applied to both edges of the negative electrode active material layer 120, it is not limited thereto, and the dam coating layer 130 may be applied to only one edge of the negative electrode active material layer 120.

The negative electrode active material layer 120 may be formed by drying the negative electrode slurry 120SE applied on the current collector 110, and the dam coating layer 130 may be formed by drying the composition for coating the negative electrode dam 130CD described above.

Referring to FIGS. 3 and 5, the negative electrode 100 according to one embodiment includes a negative electrode active material layer 120 formed from a negative electrode slurry 120SE, wherein the negative electrode active material layer 120 may be divided into a flattening region 120A, the surface of which is parallel to the plane of the negative electrode current collector 110, and a sliding region 120S, which extends from the flattening region 120A but whose surface is inclined to the plane of the negative electrode current collector 110. And, the sliding region 120S may be located at one end and the other end of the negative electrode active material layer 120, respectively, with respect to the full-length direction (Y-axis direction).

In the negative electrode 100 according to one embodiment, the dam coating layer 130 serves to prevent the negative electrode slurry from diffusing along the current collector, thereby reducing the sliding length of the negative electrode active material layer 120. And as the sliding length is reduced, the risk of NP/Ratio inversion in the sliding region can be prevented.

In one embodiment, the full-length direction length of the sliding region 120S may be 4 mm or less, preferably in the range of 0.5 to 3.5 mm, more preferably in the range of 0.5 to 3 mm. This is a reduced length compared to the sliding length of the negative electrode without the negative electrode dam coating layer as shown in FIG. 1.

In order to control the surface tension of the negative electrode dam coating composition to the level of the negative electrode slurry, the negative electrode dam coating layer 130, according to one embodiment, may include a hydrophobic powder, the cellulose-based compound, the rubber-based binder and the inorganic particles. The hydrophobic powder has the effect of increasing the surface tension of the composition for coating the negative electrode dam to the level of the surface tension of the negative electrode active material layer, and the rubber-based binder can impart flexibility to the dam coating layer to prevent deintercalation of the dam coating layer when physical external forces are applied, ultimately improving the stability of the dam coating layer.

In one embodiment, the hydrophobic powder may be one or a mixture of two species selected from the group consisting of boron nitride (BN), silicon nitride (Si₃N₄), aluminum nitride (AlN), silica, silicates, and organopolysiloxanes.

The hydrophobic powder, cellulose-based compound, rubber-based binder, and inorganic particles have been described in detail above and will not be repeated herein.

According to one embodiment, the dam coating layer 130 may have a maximum value of its thickness in the range of 20 to 40 µm, more specifically 22 to 40 µm, and even more specifically 25 to 35 µm. The thickness means a distance in the Z-axis direction from the plane of the negative electrode current collector to the surface of the dam coating layer 130.

According to one embodiment, the full-length direction (Y-axis direction) length of the dam coating layer 130 may be in the range of 3 mm or less, more specifically in the range of 0.5 to 3 mm, and more specifically in the range of 1 to 2.5 mm.

According to one embodiment, the thickness ratio (T2/T1) of the maximum thickness value T2 of the dam coating layer to the average value T1 of the thickness of the negative electrode active material layer in the flattening region in the negative electrode active material layer may range from 0.1 to 0.4, more specifically from 0.15 to 0.3.

Since the composition for coating the negative electrode dam must act as a dam to prevent the negative electrode slurry from spreading out, the application thickness of the negative electrode dam coating composition is preferably at least a certain level. Referring to FIG. 3, at the moment of application of the composition for coating the negative electrode dam, the application thickness may have a level similar to the application thickness of the negative electrode slurry. Even if the application thickness of the negative electrode dam coating composition is at a level similar to the application thickness of the negative electrode slurry, the solid content of the negative electrode dam coating composition is much smaller compared to the solid content of the negative electrode slurry, so that the thickness of the dam coating layer becomes smaller than the thickness of the negative electrode active material layer as it undergoes a series of electrode processes such as a drying process.

According to one embodiment, the adhesion of the dam coating layer 130 may be in the range of 90 gf/20 mm or more, more specifically 95 to 200 gf/20 mm, more specifically 100 to 150 gf/20 mm.

The adhesion is achieved by applying a composition for coating a negative electrode dam on a copper foil, drying it at a temperature of 80 to 90°C, cutting it to a length of 150 mm and a width of 20 mm, and attaching the specimen to a slide glass having a length of 75 mm and a width of 25 mm with the coating side of the composition for coating the negative electrode dam facing the slide glass, using double-sided tape in the longitudinal direction. The specimen for evaluation is then passed through a laminator to ensure uniform attachment of the double-sided tape. Next, the slide glass portion of the evaluation specimen is fixed to the sample stage of the Universal Testing Machine (UTM) (LS5, AMETEK), and the half of the specimen without the slide glass is connected to the load cell of the UTM machine. The load applied to the load cell is measured by moving it 50 mm at a speed of 100 mm/min and applying a 90° force. The average of the measured loads in the 20 mm to 40 mm range is taken over the course of the trip. The test is repeated five times and the average value is evaluated as the adhesion (gf/20 mm) of each sample.

When the adhesion of the dam coating layer 130 is within the above numerical range, it is desirable because the dam coating layer will not deintercalate in an electrode process, such as a rolling process.

The negative electrode current collector 110 is a metal that is highly conductive and to which the slurry for the negative electrode can readily adhere, and any non-reactive material in the voltage range of the battery can be used, and in particular, copper, stainless steel, aluminum, nickel, titanium, calcined carbon; stainless steel surface-treated with carbon, nickel, titanium, or silver; aluminum-cadmium alloy; non-conductive polymer surface-treated with a conductive material; or conductive polymer may be used. They can also have microscopic irregularities on the surface to enhance the coupling force of the negative electrode active material, and can be used in a variety of forms, including films, sheets, foils, nets, porous materials, foams, and nonwoven materials.

The negative electrode active material layer 120 may include a negative electrode active material, a binder, and, as desired, conductive materials and fillers.

The negative electrode active material may be any compound capable of reversible intercalation and deintercalation of lithium. Specific examples include carbonaceous materials such as artificial graphite, natural graphite, graphitized carbon fiber, amorphous carbon, and the like; metallic substances capable of being alloyed with lithium, such as Si, Al, Sn, Pb, Zn, Bi, In, Mg, Ga, Cd, Si alloys, Sn alloys, or Al alloys; SiO_{β} (0 < β < 2), SnO₂, vanadium oxide, lithium vanadium oxide, and metal oxides capable of doping and de-doping lithium; or composites including the above metallic substances and carbonaceous materials, such as Si-C composites or Sn-C composites, any one or more of which may be used. Metallic lithium thin films may also be used as the negative electrode active material.

In particular, both low crystalline and high crystalline carbons may be used as the carbonaceous material. Examples of low crystalline carbons include soft carbon and hard carbon, and examples of high crystalline carbons include natural graphite, artificial graphite, Kish graphite, pyrolytic carbon, mesophase pitch based carbon fiber, mesocarbon microbeads, mesocarbon microbeads, Mesophase pitches, and petroleum or coal tar pitch derived cokes can be used, and more particularly, graphite-based negative electrode active materials such as natural or artificial graphite are preferred in that they allow reversible intercalation and deintercalation of lithium ions while maintaining structural and electrical properties.

The negative electrode active material may be included in an amount of about 80 wt% to 99.5 wt%, or from 88 wt% to 99 wt%, based on the total weight of the negative electrode active material layer, but the content is not limited to the above.

The binder is not particularly limited as long as it is a component that aid in the coupling of the negative electrode active material to the conductive material and the coupling of the conductive material to the current collector, such as polyvinylidene fluoride, polyvinyl alcohol, carboxyl methyl cellulose (CMC), starch, hydroxyl propyl cellulose, regenerated cellulose, polyvinylpyrrolidone, polytetrafluoroethylene, polyethylene, polypropylene, monomer (EPDM), ethylene propylene diene sulfonated EPDM, styrene butadiene rubber, fluorinated rubber, and various copolymers.

The binder is preferably an aqueous binder when the solvent of the negative electrode slurry is an aqueous solvent such as water. In a specific example, the aqueous binder may be one or more species selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluororubber, polytetrafluoroethylene, polyethylene, polypropylene, ethylene propylene copolymer, polyethylene oxide, polyvinylpyrrolidone, polyvinylpyrrolidone, polypichlorohydrin, polyphosphazene, polyacrylonitrile, polystyrene, ethylene propylene diene copolymer, polyvinylpyridine, chlorosulfonated polyethylene, latex, polyester resin, acrylic resin, phenolic resin, epoxy resin, polyvinyl alcohol, hydroxypropylmethylcellulose, hydroxypropylcellulose, and diacetylcellulose. In a specific example, the aqueous binder may be one or more selected from the group consisting of styrene-butadiene rubber, acrylate styrene-butadiene rubber, acrylonitrile-butadiene rubber, and acrylonitrile-butadiene-styrene rubber. For example, a aqueous binder can be a styrene-butadiene rubber.

The binder may typically be included from 1 to 30 wt% based on the total weight of the negative electrode active material layer.

The conductive material is not particularly limited as long as it has conductivity without causing chemical changes in the battery, for example, graphite, such as natural graphite or artificial graphite; carbon black, such as carbon black, acetylene black, ketjen black, channel black, furnace black, lamp black, thermal black, etc.; conductive fibers, such as carbon fibers or metal fibers; conductive tubes, such as carbon nanotubes; metal powders, such as fluorocarbon, aluminum, nickel powders; conductive whiskers, such as zinc oxide, potassium titanate; conductive metal oxides, such as titanium oxide; conductive materials, such as polyphenylene derivatives, and the like may be used.

The conductive material may typically be included in an amount of 1 to 30 wt% based on the total weight of the negative electrode active material layer.

The filler is optionally used as a component to inhibit the expansion of the electrodes, and is not particularly limited as long as it is a fibrous material that do not cause chemical changes in the battery, for example, olefin-based polymers such as polyethylene, polypropylene, and the like; fibrous materials such as glass fibers, carbon fibers, and the like may be used.

The following describes the manufacturing method of the negative electrode.

A manufacturing method of a negative electrode according to one embodiment may include step P11 of preparing a negative electrode slurry, step P12 of preparing a composition for coating the negative electrode dam, a coating step P20 of applying the composition for coating the negative electrode dam and the negative electrode slurry onto a negative electrode current collector, and a step P30 of drying and rolling.

The step P11 of preparing the negative electrode slurry may include mixing and stirring the negative electrode active material, binder, conductive material, and optionally a dispersant or filler in a solvent.

The solvent may be any solvent commonly used in the art, such as dimethylsulfoxide (DMSO), isopropyl alcohol, N-methylpyrrolidone (NMP), acetone, or water, and may be used alone or in a mixture of two or more of the foregoing. The solvent may preferably be included in an amount to ensure that the negative electrode active material has a suitable viscosity, considering the applicability and processability of the negative electrode active material slurry.

The solvent may be included in an amount to provide the negative electrode slurry with a suitable viscosity and solids content. For example, the solvent may be included in an amount such that the solids content in the negative electrode slurry is from 40 wt% to 75 wt%, more particularly from 50 wt% to 70 wt%, and more particularly from 55 wt% to 70 wt%. Furthermore, the negative electrode slurry may have a viscosity at a coat-able level, and the negative electrode active material layer formed from the negative electrode slurry may have a thickness above a certain level to obtain a good energy density.

The step P12 of preparing a composition for coating a negative electrode dam may include, in one embodiment, mixing and stirring the hydrophobic powder, the cellulose-based compound, the rubber-based binder and inorganic particles in a solvent.

The solvent, hydrophobic powder, the cellulose-based compound, the rubber-based binder, and inorganic particles necessary for the preparation of the composition for coating the negative electrode dam have been described in detail previously, so that redundant descriptions will be omitted.

The coating step P20 of applying the composition for coating the negative electrode dam and the negative electrode slurry to the negative electrode current collector may be performed by applying the composition for the negative electrode dam coating after applying the negative electrode slurry to the negative electrode current collector, or by applying the slurry for the negative electrode and the composition for coating the negative electrode dam simultaneously to the negative electrode current collector.

### Lithium secondary battery

Next, a lithium secondary battery according to the present disclosure will be described.

A lithium secondary battery according to one embodiment of the present disclosure may include a positive electrode, a negative electrode, a separator interposed between the positive electrode and negative electrode, and an electrolyte.

The lithium secondary battery of the present disclosure can be prepared according to conventional methods known in the art. For example, it can be prepared by placing a separator between the positive electrode and negative electrode and adding an electrolyte.

In the lithium secondary battery, the negative electrode is as described above. For example, the negative electrode may include: a negative electrode current collector; a negative electrode active material layer disposed on one or both sides of the negative electrode current collector; and a dam coating layer disposed on one or both sides of the negative electrode current collector, wherein the dam coating layer is in surface contact with an end of the negative electrode active material layer, and may further include the hydrophobic powder, the cellulose-based compound, the rubber-based binder, and the inorganic particles.

In one embodiment, the hydrophobic powder may be one or a mixture of two species selected from the group consisting of boron nitride (BN), silicon nitride (Si₃N₄), aluminum nitride (AlN), silica, silicates, and organopolysiloxanes.

In one embodiment of the present disclosure, the dam coating layer may include, based on 100 parts by weight of the dam coating layer, 15 to 50 parts by weight of the hydrophobic powder; 0.5 to 5 parts by weight of the cellulose-based compound; 3 to 15 parts by weight of the rubber-based binder; and 35 to 75 parts by weight of the inorganic particles.

The positive electrode may include a positive electrode current collector and a positive electrode active material layer formed on the positive electrode current collector and including the positive electrode active material.

In the positive electrode, the positive electrode current collector is not particularly limited as long as it is conductive without causing chemical changes in the battery, for example, stainless steel, aluminum, nickel, titanium, calcined carbon, or aluminum or stainless steel that is surface-treated with carbon, nickel, titanium, silver or the like may be used. Further, the positive electrode current collector may have a thickness of typically 3 to *500 µ*m*,* and may also have microscopic irregularities formed on the surface of the current collector to increase the adhesion of the positive electrode active material. For example, it can be used in various forms such as films, sheets, foils, nets, porous bodies, foams, nonwoven bodies, and the like.

The positive electrode active material is not particularly limited, and any compound known in the art that is capable of reversible intercalation and deintercalation of lithium may be used without limitation. Specifically, the positive electrode active material may include a layered compound such as lithium cobalt oxide (LiCoO₂), lithium nickel oxide (LiNiO₂), or a compound substituted with one or more transition metals; lithium manganese oxides, such as a compound of the formula Li₁₊ₓMn₂₋ₓO₄ (where x is 0 to 0.33); LiMnO₃, LiMn₂O₃, LiMnO₂; lithium copper oxide (Li₂CuO₂); vanadium oxides, such as LiV₃O₈, LiV₃O₄, V₂O₅, Cu₂V₂O; and a Ni site-type lithium nickel oxide of the formula LiNi₁₋ₓMₓO₂ (where M = Co, Mn, Al, Cu, Fe, Mg, B, or Ga, and x = 0.01 to 0.3); a lithium manganese complex oxide represented by the formula LiMn₂₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); a lithium manganese complex oxide with a spinel structure, represented by LiNiₓMn₂₋ₓO₄; LiMn₂O₄ wherein a portion of the Li in the formula is substituted by an alkaline earth metal ion; disulfide compounds; lithium iron phosphate, represented by LiFePO₄; disulfide compounds; Fe₂(MoO₄)₃, and the like, but is not limited thereto.

The positive electrode active material layer may include, in addition to the positive electrode active material described above, a positive electrode conductive material and a positive electrode binder.

The positive electrode conductive material is used to impart conductivity to the electrode, and may be carbon black, graphite, carbon fiber, carbon nanotubes, metal powder, conductive metal oxide, organic conductive material, etc. Currently commercially available as a conductive material are acetylene black series (such as Chevron Chemical Company or Gulf Oil Company), Ketjen Black EC series (Armak Company), Vulcan XC-72 (Cabot Company), and Super P (MMM Company). Of these, carbon nanotubes, carbon nanofibers, and carbon black are preferred as conductive materials for the present disclosure, with carbon nanotubes being the most preferred. The conductive network of carbon nanotubes is most preferred as a conductive material for the positive electrode of the present disclosure because it can alleviate the phenomenon of binder migration during the drying process of the positive electrode slurry.

The BET specific surface area of the carbon nanotubes may be from 100 m²/g to 1000 m²/g, from 150 m²/g to 800 m²/g, from 150 m²/g to 500 m²/g, from 150 m²/g to 300 m²/g, or from 150 m²/g to 200 m²/g.

The positive electrode conductive material may be included in an amount from 0.1 to 30 wt%, more particularly from 0.1 to 10 wt%, more particularly from 0.5 to 5 wt%, in the positive electrode active material layer.

The positive electrode binder may be any binder polymer in common use, without limitation. For example, polyvinylidene fluoride-hexafluoropropylene (PVDF-co-HFP), polyvinylidene fluoride (PVDF), polyacrylonitrile, polymethyl methacrylate, styrene butadiene rubber (SBR), carboxyl methyl cellulose (CMC), and many other types of binder polymers can be used.

The positive electrode binder may be included in an amount from 0.1 to 30 wt%, more particularly from 0.1 to 10 wt%, more particularly from 0.5 to 5 wt% in the positive electrode active material layer.

The separator can be any porous material commonly used as a separator in lithium secondary batteries, such as, but not limited to, polyolefin-based porous membranes or nonwoven fabrics. In particular, it is preferable to have a low resistance to ion migration of the electrolyte and an excellent ability to wet electrolyte.

Examples of the polyolefin-based porous membranes include membranes formed from polyethylene, such as high-density polyethylene, linear low-density polyethylene, low-density polyethylene, and ultra-high molecular weight polyethylene, and polyolefin-based polymers, such as polypropylene, polybutylene, and polypentene, either alone or a mixture thereof.

In addition to polyolefin-based nonwoven fabrics, the nonwoven fabrics include, for example, polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene, and the like, either alone or as a mixture of these polymers. The structure of the nonwoven fabric can be a spunbonded nonwoven fabric or a melt-blown nonwoven fabric composed of long fibers.

The thickness of the porous substrate is not particularly limited, but may be from 5 to 50 µm, and the pore size and porosity present in the porous substrate are also not particularly limited, but may be from 0.01 to 50 µm and 10 to 95%, respectively.

Meanwhile, in order to improve the mechanical strength of the separator composed of the porous substrate and to suppress a short circuit between the positive electrode and the negative electrode, at least one side of the porous substrate may further include a porous coating layer including inorganic particles and a binder polymer.

Meanwhile, in the lithium secondary battery, the electrolyte may include, but is not particularly limited to, organic solvents and lithium salts conventionally used in electrolytes.

The organic solvent may be used without limitation as long as it is capable of acting as a medium in which the ions involved in the electrochemical reaction of the battery can move. Specifically, the organic solvents may include ester-based solvents such as methyl acetate, ethyl acetate, γ-butyrolactone, ε-caprolactone, and the like; ether-based solvents, such as dibutyl ether or tetrahydrofuran; ketone-based solvents, such as cyclohexanone; aromatic hydrocarbon solvents, such as benzene and fluorobenzene; carbonate solvents such as dimethylcarbonate (DMC), diethylcarbonate (DEC), methylethylcarbonate (MEC), ethylmethylcarbonate (EMC), ethylene carbonate (EC), propylene carbonate (PC), and others.

Among them, carbonate-based solvents are preferred, and mixtures of annular carbonates (e.g., ethylene carbonate or propylene carbonate), which have high ionic conductivity and high dielectric constant that can improve the charge and discharge performance of the battery, and linear carbonate-based compounds (e.g., ethylmethylcarbonate, dimethylcarbonate, or diethylcarbonate) with low viscosity are more preferred.

The lithium salts may be used without limitation as long as they are compounds capable of providing lithium ions for use in a lithium secondary battery. Specifically, the lithium salts may be LiPF₆, LiClO₄, LiAsF₆, LiBF₄, LiSbF₆, LiAlO₂, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, Lil, or LiB(C₂O₄)₂. Preferably, the lithium salt is included in the electrolyte at a concentration of about 0.6 mol% to 2 mol%.

In addition to the electrolyte components, for the purpose of improving the life characteristics of the battery, inhibiting the decrease of the battery capacity, improving the discharge capacity of the battery, etc, the electrolyte may also include additives such as, for example, pyridine, triethylphosphite, triethanolamine, cyclic ether, ethylenediamine, N-glyme, hexaphosphate triamide, nitrobenzene derivatives, sulfur, quinone imine dyes, N-substituted oxazolidinones, N,N-substituted imidazolidines, ethylene glycol dialkyl ether, ammonium salts, pyrroles, 2-methoxyethanol, or aluminum trichloride. The additives may be included in an amount of 0.1 to 5 wt% based on the total weight of the electrolyte.

The lithium secondary battery of the present disclosure can be manufactured by placing a separator between the positive electrode and the negative electrode to form an electrode assembly, which is placed in a cylindrical or prismatic battery case and then injected with an electrolyte. Alternatively, the lithium secondary battery may be produced by laminating the electrode assembly, impregnating it with an electrolyte, and sealing the resulting product in a battery case.

In manufacturing the lithium secondary battery of the present disclosure, the electrode assembly can be dried to remove one or more organic solvents selected from the group consisting of N-methyl-2-pyrrolidone (NMP), acetone, ethanol, propylene carbonate, ethyl methyl carbonate, ethylene carbonate, and dimethyl carbonate used in the manufacture of the positive electrode. If, as the electrolyte, an electrolyte of the same composition as the organic solvent used to prepare the positive electrode is used, the process of drying the electrode assembly may be omitted.

Unlike the lithium secondary battery described above, the lithium secondary battery according to other examples of the present disclosure may be an all-solid-state battery.

The battery case may be any conventionally used in the art, and is not limited in shape depending on the intended use of the battery, and may be, for example, cylindrical, prismatic, pouch-type, or coin-type using a can.

The lithium secondary battery according to the present disclosure exhibits excellent resistance characteristics, discharge capacity, power characteristics, and capacity retention, and is therefore useful in portable devices such as cell phones, laptops, and digital cameras, and in electric vehicles such as energy storage systems (ESS) and hybrid electric vehicles (HEV).

The present disclosure will now be described in more detail by way of examples. However, the following examples are intended to illustrate the present disclosure and are not intended to limit the scope of the present disclosure.

### Example 1: Preparation of a negative electrode

### (Preparation of a composition for coating negative electrode dam)

A composition for coating a negative electrode dam was prepared by mixing and stirring 20 parts by weight of boron nitride (BN) as a hydrophobic powder, 4 parts by weight of CMC (Daicel, 2200) with a Mw of 1,260,000 as a cellulose-based compound, 8 parts by weight of styrene-butadiene rubber (SBR) as a rubber-based binder, and 68 parts by weight of boehmite (AlO(OH) product name: AOH60) as an inorganic particles in water. The solids content was 27.5 wt%.

### (Preparation of a negative electrode slurry)

A negative electrode slurry was prepared by mixing and stirring artificial graphite (D50 23 *µ*m*,* specific surface area 1.0 m²/g, tap density 0.9g/cc) with sphericity 0.85 as the negative electrode active material, styrene butadiene rubber (SBR) as the binder, carboxyl methyl cellulose (CMC) as the thickener, and carbon nanotubes as the conductive material in a weight ratio of 95:2:1.5:1.5 in water (solids content: 50 wt%).

### (Preparation of a negative electrode)

On a copper foil (thickness 10 µm), the negative electrode slurry and the composition for coating the negative electrode dam were coated simultaneously, but the composition for coating the negative electrode dam was applied so that it is located on both edges of the negative electrode slurry application part in the Y-axis direction as shown in FIG. 5.

The negative electrode was then dried and rolled at a temperature of 90°C to complete the preparation.

### Example 2 through Example 5: Preparation of a negative electrode

### (Preparation of a composition for coating negative electrode dam)

In Example 1, a composition for coating a negative electrode dam was prepared by changing the weight ratio of hydrophobic powder, cellulose-based compound, rubber-based binder, and inorganic particles as shown in Table 1.

The negative electrode slurry and negative electrode were then prepared in the same manner as in Example 1.

### Comparative Example 1: Preparation of a negative electrode

### (Preparation of a composition for coating negative electrode dam)

A composition for coating a negative electrode dam was prepared by mixing and stirring 4 parts by weight of CMC (Daicel, 2200) with a Mw of 1,260,000 and 96 parts by weight of boehmite (AlO(OH) product name: AOH60) in water. The solids content was 25 wt%.

The negative electrode slurry and negative electrode were then prepared in the same manner as in Example 1.

### Comparative Example 2: Preparation of a negative electrode

### (Preparation of a composition for coating negative electrode dam)

A composition for coating a negative electrode dam was prepared by mixing and stirring 4 parts by weight of CMC (Daicel, 2200) with a Mw of 1,260,000, 95 parts by weight of boehmite (AlO(OH) product name: AOH60), and 1 part by weight of styrene butadiene rubber (SBR) (BM-L302, ZEON) in water. The solids content was 25 wt%.

The negative electrode slurry and negative electrode were then prepared in the same manner as in Example 1.

### Comparative example 3: Preparation of a negative electrode

In the preparation of the composition for coating the negative electrode dam in Comparative Example 2, the composition for coating the negative electrode dam (solids content 25 wt%) was prepared in the same manner as in Comparative Example 2, except that the weight ratio of CMC, boehmite and SBR was changed to 4:93:3. The negative electrode slurry and negative electrode were then prepared in the same manner as in Example 1.

### Comparative Example 4: Preparation of a negative electrode

In the preparation of the composition for coating the negative electrode dam in Comparative Example 2, the composition for coating the negative electrode dam (solids content 25 wt%) was prepared in the same manner as in Comparative Example 2, except that the weight ratio of CMC, boehmite and SBR was changed to 4:88:8. The negative electrode slurry and negative electrode were then prepared in the same manner as in Example 1.

### Comparative Example 5: Preparation of a negative electrode

In the preparation of the composition for coating the negative electrode dam in Comparative Example 2, the composition for coating the negative electrode dam (solids content 25 wt%) was prepared in the same manner as in Comparative Example 2, except that the weight ratio of CMC, boehmite and SBR was changed to 4:83:13. The negative electrode slurry and negative electrode were then prepared in the same manner as in Example 1.

### Comparative Example 6: Preparation of a negative electrode

### (Preparation of a composition for coating negative electrode dam)

A composition for coating a negative electrode dam was prepared by mixing and stirring 2.5 parts by weight of CMC (Daicel, 2200) with a Mw of 1,260,000 and 97.5 parts by weight of SBR (styrene butadiene rubber) (BM-L302, ZEON) in water. The solids content was 24 wt%.

### Experimental Example 1: Viscosity measurement of a composition for coating negative electrode dam

For each of the composition for coating a negative electrode dam of Examples 1 through 5 and Comparative Examples 1 through 6, the viscosity was measured using a viscometer (Brookfield) at a shear rate of 2.5/s at 25°C after cooling for 1 hour at a relative humidity of 1%. The viscosity measurements were performed within 2 hours after preparation of the composition for coating a negative electrode dam, including the cooling time. The results are shown in Table 1 and Table 2.

### Experimental Example 2: Evaluating surface tension

For each of the composition for coating the negative electrode dam of Examples 1 through 5 and Comparative Examples 1 through 6, surface tension was measured using a DCA-200 (Dynamic Contact Angle System, SEO) instrument under the following conditions. The results are shown in Table 1 and Table 2.
Motor speed: 15 rpm/s
Probe type: Ring
Immersion depth: 4
Surface Detect weight: 0.005
Stabilization time: 5

### Experimental Example 3: Confirming the occurrence of a fat-edge

For each negative electrode in Examples 1 through 5 and Comparative Examples 1 through 6, the negative electrode active material layer was visually observed to determine if the fat-edge shown in FIG. 3 occurred, and the results are shown in Tables 1 and 2. If the fat-edge occurred, it was marked with an 'O' and if the fat-edge did not occur, it was marked with an 'X'.

### Experimental Example 4: Evaluating adhesion

To evaluate the adhesion of the dam coating layer by the composition for coating the negative electrode dam, the composition for coating the negative electrode dam of Example 1 was applied to the copper foil, dried at a temperature of 80 to 90°C, cut into pieces 150 mm long and 20 mm wide, and attached to a slide glass 75 mm long and 25 mm wide with the surface of the dam coating layer facing the slide glass, and the specimen was attached to the slide glass with double-sided tape in the longitudinal direction. The specimen for evaluation was then passed through a laminator so that the double-sided tape was uniformly attached. Next, the slide glass portion of the evaluation specimen was fixed to the sample stage of the Universal Testing Machine (UTM) (LS5, AMETEK), and the half of the specimen without the slide glass was connected to the load cell of the UTM machine. The load applied to the load cell was measured by moving it 50 mm at a speed of 100 mm/min, and applying a 90° force. The average of the measured loads in the 20 mm to 40 mm range was taken over the course of the trip. The test was repeated five times and the average value was evaluated as the adhesion force (gf/20 mm) of each sample. The results are shown in Table 1 and Table 2.

Adhesion was also evaluated for each of the composition for coating the negative electrode dam of Examples 2 through 5 and Comparative Examples 1 through 6 in the same manner as described above, and the results are shown in Table 1 and Table 2.

**[Table 1]**

| | Composition for dam coating (parts by weight) | | | | Viscosity (cps) | Surface Tension (mN/mm) | Fat-edge occurrence | Adhesion (gf/20mm) |
|---|---|---|---|---|---|---|---|---|
| | BM | BN | CMC | SBR | | | | |
| Example 1 | 68 | 20 | 4 | 8 | 8,155 | 74.68 | X | 110 |
| Example 2 | 44 | 44 | 4 | 8 | 9,685 | 76.11 | X | 150 |
| Example 3 | 53 | 35 | 4 | 8 | 8,200 | 75.22 | X | 115 |
| Example 4 | 46 | 42 | 4 | 8 | 8,544 | 75.04 | X | 140 |
| Example 5 | 63 | 25 | 4 | 8 | 8,177 | 74.55 | X | 112 |

**[Table 2]**

| | Composition for dam coating (parts by weight) | | | Viscosity (cps) | Surface Tension (mN/mm) | Fat-edge occurrence | Adhesion (gf/20mm) |
|---|---|---|---|---|---|---|---|
| | BM | CMC | SBR | | | | |
| Comparative Example 1 | 96 | 4 | 0 | 4,861 | 74.1 | X | 48.9 |
| Comparative Example 2 | 95 | 4 | 1 | 5,549 | 71.1 | O | 53 |
| Comparative Example 3 | 93 | 4 | 3 | 5,387 | 65.1 | O | 56 |
| Comparative Example 4 | 88 | 4 | 8 | 5,707 | 62.2 | O | 161 |
| Comparative Example 5 | 83 | 4 | 13 | 5,697 | 61.3 | O | 283.4 |
| Comparative Example 6 | 0 | 2.5 | 97.5 | 3,200 | 52.96 | O | 350 or more |

| | | | | | | | |
|---|---|---|---|---|---|---|---|
| ** In Table 1 and Table 2, BM is bohemite, BN is boron nitride, CMC is carboxyl methyl cellulose, and SBR is styrene-butadiene rubber. | | | | | | | |

Referring to Table 1 and Table 2 above, it was found that each of the composition for coating the negative electrode dam of Examples 1 through 5 had a surface tension of 72 mN/mm or more, which was high enough to prevent the occurrence of fat-edge. In addition, the adhesion was also greater than or equal to 100 gf/20 mm, which is expected to reduce the possibility of deintercalation of the dam coating layer during the rolling process of the electrode.

## Claims

1. A negative electrode for a lithium secondary battery comprising:
a negative electrode current collector;
a negative electrode active material layer disposed on one or both sides of the negative electrode current collector; and
a dam coating layer disposed on one or both sides of the negative electrode current collector, wherein
the dam coating layer is in surface contact with an end of the negative electrode active material layer and includes a hydrophobic powder, a cellulose-based compound, a rubber-based binder, and inorganic particles.

2. The negative electrode for a lithium secondary battery of claim 1, wherein
the dam coating layer, based on 100 parts by weight of dam coating layer, includes:
15 to 50 parts by weight of the hydrophobic powder;
0.5 to 10 parts by weight of the cellulose-based compound;
3 to 15 parts by weight of the rubber-based binder; and
35 to 75 parts by weight of the inorganic particles.

3. The negative electrode for a lithium secondary battery of claim 1, wherein
the hydrophobic powder is one or a mixture of two species selected from the group consisting of boron nitride (BN), silicon nitride (Si₃N₄), aluminum nitride (AlN), silica, silicate, and organopolysiloxane.

4. The negative electrode for a lithium secondary battery of claim 1, wherein
the weight ratio of the inorganic particles to the hydrophobic powder is 5:1 to 1:2.

5. The negative electrode for a lithium secondary battery of claim 1, wherein
the cellulose-based compound includes at least one or two or more species selected from the group consisting of carboxyl methyl cellulose (CMC), cellulose acetate, cellulose acetate butylate, cellulose acetate propionate, a lithium salt of carboxyl methyl cellulose (CMC-Li), a sodium salt of carboxyl methyl cellulose (CMC-Na).

6. The negative electrode for a lithium secondary battery of claim 1, wherein
the rubber-based binder is a styrene-butadiene rubber (SBR).

7. The negative electrode for a lithium secondary battery of claim 1, wherein
the inorganic particles are at least one or two or more species selected from the group consisting of AlO(OH), Al₂O₃, γ-AlOOH, Al(OH)₃, SiO₂, TiO₂, SnO₂, CeO₂, MgO, NiO, CaO, ZnO, ZrO₂, Y₂O₃, SrTiO₃, BaTiO₃, and Mg(OH)₂.

8. The negative electrode for a lithium secondary battery of claim 1, wherein
the cellulose-based compound has a weight average molecular weight in the range of 800,000 to 2,000,000.

9. The negative electrode for a lithium secondary battery of claim 1, wherein
the negative electrode active material layer is divided into a flattening region, the surface of which is parallel to the plane of the negative electrode current collector, and a sliding region extending from the flattening region, the surface of which is inclined to the plane of the negative electrode current collector, wherein
the sliding region is located at one end and the other end of the negative electrode active material layer with respect to the full-length direction.

10. The negative electrode for a lithium secondary battery of claim 9, wherein
a full-length direction length of the sliding region is 4 mm or less.

11. The negative electrode for a lithium secondary battery of claim 9, wherein
a full-length direction length of the sliding region is in the range of 0.5 to 3.5 mm.

12. The negative electrode for a lithium secondary battery of claim 9, wherein
the thickness ratio (T2/T1) of the maximum thickness value T2 of the dam coating layer to the average value T1 of the thickness of the negative electrode active material layer in the flattening region in the negative electrode active material layer is within the range of 0.1 to 0.4.

13. The negative electrode for a lithium secondary battery of claim 1, wherein
the dam coating layer has,
a maximum value of its thickness within the range of 20 to 40 µm*,* and
its full-length direction length of 3 mm or less.

14. The negative electrode for a lithium secondary battery of claim 1, wherein
an adhesion of the dam coating layer is 90gf/20 mm or more.

15. A composition for coating a negative electrode dam comprising a solvent, a hydrophobic powder, a cellulose-based compound, a rubber-based binder, and inorganic particles.

16. The composition for coating a negative electrode dam of claim 15, wherein
solids excluding the solvents, based on 100 parts by weight of solids, includes:
15 to 50 parts by weight of the hydrophobic powder;
0.5 to 10 parts by weight of the cellulose-based compound;
3 to 15 parts by weight of the rubber-based binder; and
35 to 75 parts by weight of the inorganic particles.

17. The composition for coating a negative electrode dam of claim 15, wherein
the weight ratio of the inorganic particles to the hydrophobic powder is 5:1 to 1:2.

18. The composition for coating a negative electrode dam of claim 15, wherein
the content of solids, excluding the solvent, is from 18 to 38 parts by weight, based on 100 parts by weight of the composition for coating a negative electrode dam.

19. The composition for coating a negative electrode dam of claim 15, wherein
a surface tension is 72 mN/mm or more.

20. A lithium secondary battery comprising:
a negative electrode according to the claim among any one of claims 1 to 14;
a positive electrode;
a separator; and
an electrolyte.
